# EUROPEAN PATENT SPECIFICATION

(11) **EP 3 697 002 B1**
(45) Date of publication and mention of the grant of the patent: **05.06.2024**
(21) Application number: 18866564.0
(22) Date of filing: 09.10.2018
(51) Int. Cl.: H04J 13/16, H04L 1/00, H04L 1/16, H04L 5/00

(54) **USER EQUIPMENT AND WIRELESS COMMUNICATION METHOD**
BENUTZERGERÄT UND DRAHTLOSKOMMUNIKATIONSVERFAHREN
ÉQUIPEMENT D'UTILISATEUR ET PROCÉDÉ DE COMMUNICATION SANS FIL

(30) Priority: 11.10.2017 JP 2017208620
(43) Date of publication of application: 19.08.2020
(73) Proprietor: NTT DOCOMO, INC., Chiyoda-ku Tokyo 100-6150 (JP)
(72) Inventor: MATSUMURA, Yuki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2018/037598
(87) International publication number: WO 2019/073969

(56) References cited:
- WO-A2-2011/085230
- JP-A- 2015 092 716
- US-A1- 2012 082 157
- US-A1- 2012 082 157
- US-A1- 2013 301 550
- LG ELECTRONICS: "Performance of ACK/NACK sub-code in joint coding on PUCCH for extended CP", 3GPP TSG-RAN WG1#52b R1-081264, 26 March 2008 (2008-03-26), pages 1-7, XP050109705,
- NOKIA SIEMENS NETWORKS ET AL: "Joint coding for CQI+ACK/NACK transmission on PUCCH for extended cyclic prefix", 3GPP DRAFT; R1-080307, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080108, 8 January 2008 (2008-01-08), XP050108828, [retrieved on 2008-01-08]
- HUAWEI ET AL: "Channel coding for periodic CSI and HARQ-ACK on PUCCH format 3", 3GPP DRAFT; R1-122906 CHANNEL CODING FOR PERIODIC CSI AND HARQ-ACK ON PUCCH FORMAT 3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 21 May 2012 (2012-05-21), XP050601161, [retrieved on 2012-05-21]

## Description

### Technical Field

The present invention relates to a user terminal and a radio communication method in next-generation mobile communication systems.

### Background Art

In the UMTS (Universal Mobile Telecommunications System) network, the specifications of Long-Term Evolution (LTE) have been drafted for the purpose of further increasing high speed data rates, providing lower latency, and so on (see non-patent literature 1). In addition, successor systems of LTE are also under study for the purpose of achieving further broadbandization and increased speed beyond LTE (referred to as, for example, "LTE-A (LTE-Advanced)," "FRA (Future Radio Access)," "4G," "5G," "5G+ (plus)," "NR (New RAT)," "LTE Rel. 14," "LTE Rel. 15 (or later versions)," and so on).

In existing LTE systems (for example, LTE Rel. 8 to Rel. 13), downlink (DL) and/or uplink (UL) communications are carried out using 1 ms subframes (referred to as, for example, "transmission time intervals (TTIs)"). This subframe is the unit of time to transmit one data packet that is channel-encoded, and is the processing unit in scheduling, link adaptation, retransmission control (HARQ (Hybrid Automatic Repeat reQuest), and so on.

In existing LTE systems (for example, LTE Rel. 8 to Rel. 13), a user terminal transmits uplink control information (UCI) by using a UL control channel (for example, PUCCH (Physical Uplink Control Channel)) or a UL data channel (for example, PUSCH (Physical Uplink Shared Channel)). A structure (format) of the UL control channel is referred to as a "PUCCH format," for example.

UCI includes at least one of a scheduling request (SR), retransmission control information (HARQ-ACK (Hybrid Automatic Repeat reQuest-Acknowledge), ACK or NACK (Negative ACK)) in response to DL data (DL data channel (such as a PDSCH (Physical Downlink Shared Channel)), and channel state information (CSI).

Non-Patent Literature 2 describes discloses that encoded ACK/NACK and CQI are jointly encoded. ACK/NACK is encoded by a code with length Nd. These Nd bits are then multiplexed with CQI bits and encoded jointly. It also shows that the generator matrix of a coding scheme is selected depending on the length of the concatenated information.

Non-Patent Literature 3 describes Channel coding for periodic CSI and HARQ-ACK on PUCCH format 3. It suggests to use either RM or dual RM depending on the concatenated payload size.

Patent Literature 1 discloses coding of ACK/NACK, HARQ bits using Reed-Muller code, (32, O) RM, and coding in parallel of CSI bits also using the (32,O) RM code. Then the ACK and CSI bits are concatenated and repeated, and transmitted over PUCCH.

Patent Literature 2 discloses coding of ACK/NACK, HARQ bits using Reed-Muller, RM, code, and coding in parallel of CQI/PMI/RI bits also using the RM code. Then the ACK and CQI/PMI/RI bits are concatenated and circular repetition is performed, and transmitted over PUCCH format 3.

Patent Literature 3 discloses repeating ACK/NACK bit in an ACK/NACK sub-encoder, multiplexing the repeated ACK/NACK bits and uncoded CSI bits and performing reed muller encoding on the concatenated ACK and CSI bits. The concatenated and encoded ACK and CSI bits are then transmitted on PUCCH. It shows that the code rate of a coding scheme is selected based on the length of a concatenated information.

### Citation List

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010
Non-Patent Literature 2: NOKIA SIEMENS NETWORKS ET AL.: "Joint coding for CQI+ACK/NACK transmission on PUCCH for extended cyclic prefix"; 3GPP Draft; R1-080307
Non-Patent Literature 3: HUAWEI ET AL.: "Channel coding for periodic CSI and HARQ-ACK on PUCCH format 3"; 3GPP Draft; R1-122906

Patent Literature 1: US 2013/301550 A1,
Patent Literature 2: US 2012/082157 A1
Patent Literature 3: WO 2011/085230 A2

### Summary of Invention

### Technical Problem

It is assumed that future radio communication systems (for example, LTE Rel. 14, Rel. 15, and later versions thereof, 5G, and NR) transmit the UCI using a UL control channel having a different structure (format) from existing LTE systems (for example, LTE Rel. 13 and earlier versions thereof).

For example, PUCCH formats for use in existing LTE systems are configured in 1 ms subframe units. Meanwhile, for the future radio communication systems, a study is in progress to support a UL control channel (hereinafter also referred to as a "short PUCCH") having a shorter duration than that in the existing LTE systems. In addition, another study is in progress to support a UL control channel (hereinafter also referred to as a "long PUCCH") having a longer duration than the short PUCCH.

It is also assumed that multiple uplink control information occur. This causes a problem of how to transmit such multiple uplink control information.

The present invention has been made in view of the above problems, and has an object to provide a user terminal and a radio communication method which are capable of properly transmitting multiple uplink control information.

### Solution to Problem

This object is accomplished by the subject-matter of the independent claims. Independent claim 1 defines a terminal according to the invention. Independent claim 5 defines the corresponding radio communication method according to the invention. The dependent claims concern particular embodiments.

### Advantageous Effects of Invention

The present invention allows for proper transmission of multiple uplink control information.

### Brief Description of Drawings

FIGS. 1A and 1B are diagrams to show an example of a short PUCCH and an example of a long PUCCH;
FIG. 2 is a diagram to show examples of PUCCH formats in a future radio communication system;
FIG. 3 is a diagram to show an example of allocation of PUCCH resources in the short PUCCH;
FIG. 4 is a diagram to show another example of allocation of the PUCCH resources in the short PUCCH;
FIG. 5 is a diagram to show an example of allocation of the PUCCH resources in the long PUCCH;
FIG. 6 is a diagram to show an example of coding of multiple UCI;
FIG. 7 is a diagram to show an example of a schematic structure of the radio communication system according to the present embodiment;
FIG. 8 is a diagram to show an example of an overall structure of the radio base station according to the present embodiment;
FIG. 9 is a diagram to show an example of a functional structure of a radio base station according to the present embodiment;
FIG. 10 is a diagram to show an example of an overall structure of a user terminal according to the present embodiment;
FIG. 11 is a diagram to show an example of a functional structure of a user terminal according to the present embodiment; and
FIG. 12 is a diagram to show an example of a hardware structure of a radio base station and a user terminal according to the present embodiment.

### Description of Embodiments

For future radio communication systems (for example, LTE Rel. 15, and later versions thereof, 5G, and NR), configuration (also referred to as format, PUCCH format, or the like) for a UL control channel (for example, PUCCH) used in transmission of UCI is under study.

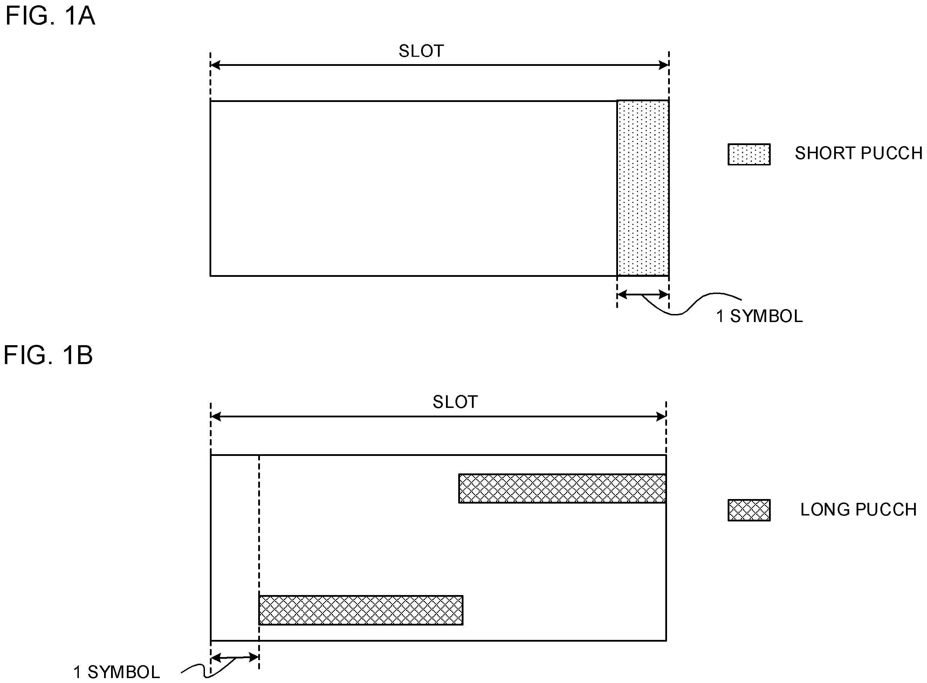

FIG. 1 illustrates diagrams to show examples of a PUCCH in a future radio communication system. FIG. 1A shows a PUCCH (a short PUCCH) constituted of a relatively small number of symbols (duration, for example, one to two symbols). FIG. 1B shows a PUCCH (a long PUCCH) constituted of a larger number of symbols (duration, for example, 4 to 14 symbols) than that of the short PUCCH.

As shown in FIG. 1A, the short PUCCH may be mapped to a certain number of symbols (for example, one to two symbols) from the end of a slot. Note that the symbols to which the short PUCCH is mapped are not limited to those at the end of the slot but may be the certain number of symbols at the start of or in the middle of the slot. In addition, the short PUCCH is mapped to one or more frequency resources (for example, one or more physical resources blocks (PRBs)). Note that it is assumed in FIG. 1A that the short PUCCH is mapped to consecutive PRBs, but the short PUCCH may be mapped to nonconsecutive PRBs.

Alternatively, the short PUCCH may be time-division-multiplexed and/or frequency-division-multiplexed with a UL data channel (hereinafter also referred to as a "PUSCH") in the slot. Furthermore, the short PUCCH may be time-division-multiplexed and/or frequency-division-multiplexed with a DL data channel (hereinafter also referred to as a "PDSCH") and/or a DL control channel (hereinafter also referred to as a "PDCCH (Physical Downlink Control Channel)") in the slot.

The short PUCCH may use a multi-carrier waveform (for example, an OFDM (Orthogonal Frequency Division Multiplexing) waveform) or may use a single-carrier waveform (for example, a DFT-s-OFDM (Discrete Fourier Transform-Spread-Orthogonal Frequency Division Multiplexing) waveform).

Meanwhile, as shown in FIG. 1B, the long PUCCH may be mapped over a larger number of symbols (for example, 4 to 14 symbols) than that of the short PUCCH. In FIG. 1B, the long PUCCH is not mapped to a certain number of symbols at the starting of the slot but may be mapped to the certain number of symbols at the start.

As illustrated in FIG. 1B, to obtain a power boosting effect, the long PUCCH may be constituted of a smaller number of frequency resources (for example, one or two PRBs) than that of the short PUCCH or may be constituted of the equal number of frequency resources to that of the short PUCCH.

The long PUCCH may be frequency-division-multiplexed with a PUSCH in the slot. The long PUCCH may be time-division-multiplexed with a PDCCH in the slot. The long PUCCH may be mapped to the same slot as that of the short PUCCH. In long PUCCH, a single-carrier waveform (for example, a DFT-s-OFDM waveform) may be used, or a multi-carrier waveform (for example, an OFDM waveform) may be used.

As shown in FIG. 1B, in the long PUCCH, frequency hopping may be applied in a certain duration (for example, mini-slot (sub-slot)) in a slot. The frequency hopping may be performed at a timing at which the number of the symbols to be transmitted before the frequency hopping is equal to that after the frequency hopping (for example, in a case of 14 symbols per slot, seven symbols), or may be performed at a timing at which the number of the symbols to be transmitted before the frequency hopping is not equal to that after the frequency hopping (for example, in the case of 14 symbols per slot, six symbols in the former part and eight symbols in the latter part).

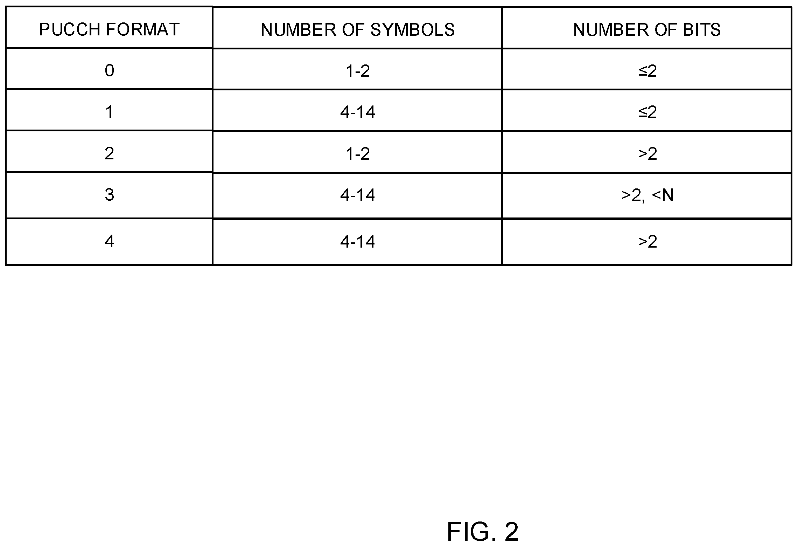

FIG. 2 is a diagram to show examples of PUCCH formats in a future radio communication system. FIG. 2 shows a plurality of PUCCH formats which have different numbers of symbols constituting the PUCCH and/or have different number of bits of UCI transmitted using the PUCCH. Note that the PUCCH formats shown in FIG. 2 are mere examples, and PUCCH formats 0 to 4 are not limited to those shown in FIG. 2.

For example, in FIG. 2, PUCCH format 0 is a short PUCCH for up to two bits of UCI (for example, FIG. 1A), and is also referred to as, for example, a sequence-based short PUCCH. This short PUCCH conveys up to two bits of UCI (for example, HARQ-ACK and/or SR) in one symbol or two symbols.

PUCCH format 1 is a long PUCCH for up to two bits of UCI (for example, FIG. 1B). This long PUCCH conveys up to two bits of UCI in any number of symbols within 4 to 14 symbols. In PUCCH format 1, code division multiplexing (CDM) of multiple user terminals may be performed within the same PRB by block-wise spreading of a time-domain using, for example, cyclic shift (CS) and/or an orthogonal spreading code (OCC (Orthogonal Cover Code)).

PUCCH format 2 is a short PUCCH for more than two bits of UCI (for example, FIG. 1A). This short PUCCH conveys more than two bits of UCI in one symbol or two symbols.

PUCCH format 3 is a long PUCCH for more than two bits of UCI (for example, FIG. 1B), and in this format, multiple user terminals can be multiplexed within the same PRB. This long PUCCH conveys UCI with more than two bits and less than N bits (or N bits or less) in any number of symbols within 4 to 14 symbols. In PUCCH format 3, code division multiplexing of multiple user terminals may be performed within the same PRB by block-wise spreading of a time-domain using CS and/or OCCs. Alternately, the multiple user terminals may be multiplexed using at least one of block-wise spreading (of a frequency domain) prior to discrete Fourier transform (DFT), frequency division multiplexing (FDM), or comb-shaped subcarriers (Comb).

Note that the threshold value N for the number of bits of the UCI may be an integer more than 3 (or 3 or more), may be defined by specifications, or may be determined using higher layer signaling (for example, at least one of RRC (Radio Resource Control) signaling, broadcasting information (such as an MIB (Master Information Block), or system information (such as an SIB (System Information Block) or RMSI (Remaining Minimum System Information)) .

PUCCH format 4 is a long PUCCH for more than two bits of UCI (for example, FIG. 1B), and in this format, a single user terminal is multiplexed within the same PRB. This long PUCCH conveys more than N bits (or N bits or more) of the UCI. PUCCH format 4 is different from PUCCH format 3 in that, in PUCCH format 4, multiple user terminals are not multiplexed within the same PRB.

As can be seen, in the future radio communication systems, UCI is assumed to be transmitted using multiple PUCCH formats (short or long PUCCHs) based on, for example, the number of bits of the UCI to be transmitted.

When UCI is transmitted using a PUCCH, a UE allocates the UCI to a resource of a certain uplink control channel (also referred to as a PUCCH resource) to transmit the UCI. The PUCCH resource refers to a resource specified by at least one of a time domain, a frequency domain, or a code domain. When no code is utilized for PUCCH transmission, the frequency domain and/or the time domain can specify the PUCCH resource. Other information may be, of course, added to specify the PUCCH resource.

The frequency domain of the PUCCH resource is configured in a certain resource unit (for example, a PRB unit). The time domain of the PUCCH resource is configured in a symbol unit included in a slot, or in both the slot and the symbol unit, for example. The base station may indicate, to the UE, a combination of a PRB and a symbol or a combination of a PRB, a symbol, and code information, as the PUCCH resource.

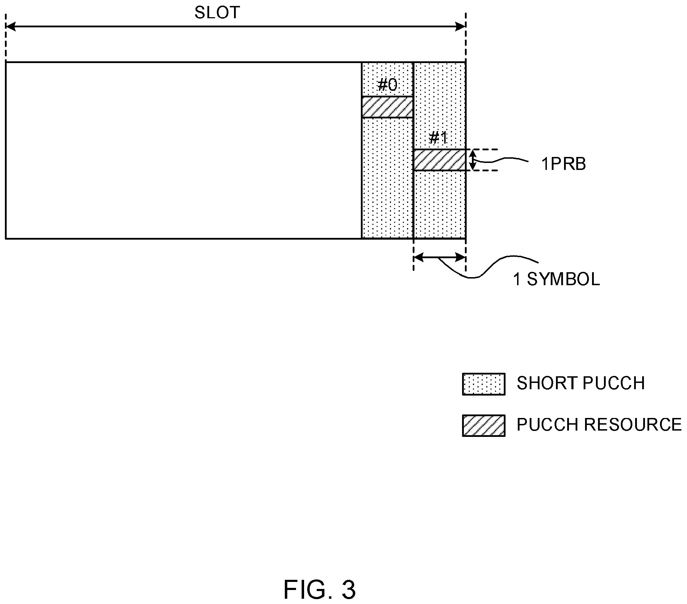

When the short PUCCH (for example, PUCCH format 0) is configured to have two symbols, UCI may be transmitted using the PUCCH resources to be allocated to the respective symbols (see FIG. 3). FIG. 3 shows a case where PUCCH resource #0 is provided to the first symbol of the two symbols, and PUCCH resource #1 is provided to the second symbol. In this case, the UE can transmit UCI using multiple (e.g., two) PUCCH resources. Note that the PUCCH resource for each symbol is not limited to one PRB, but may be configured with two or more PRBs.

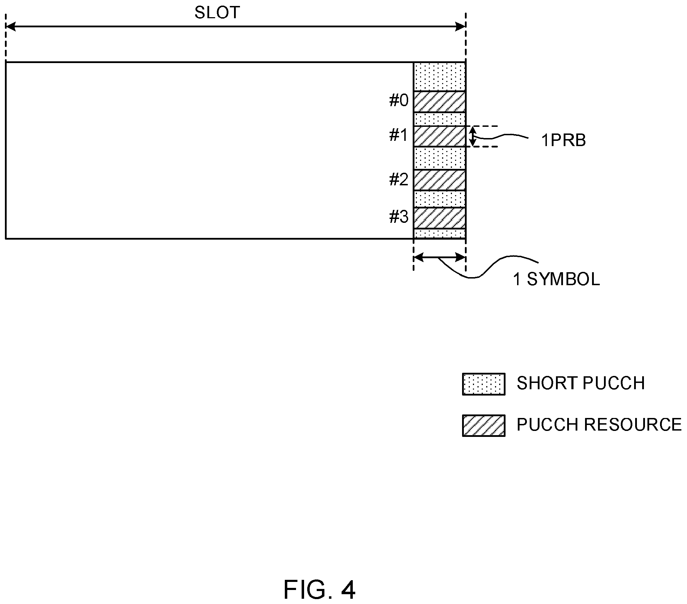

In another short PUCCH (e.g., PUCCH format 2) for use in transmission of more bits of information than PUCCH format 0, UCI may be transmitted using more PRBs. For example, when the short PUCCH is configured to have one symbol or two symbols, contiguous or non-contiguous multiple PRBs may constitute a PUCCH resource in each symbol (see FIG. 4).

FIG. 4 shows a case where the PUCCH resources (here, PUCCH resources #0 to #3) are configured using non-contiguous four PRBs in a short PUCCH configured to have one symbol. Each PUCCH resource is not limited to one PRB, and may be configured with multiple PRBs. In this case, the PRB constituting each PUCCH resource may include multiple contiguous PRBs or multiple non-contiguous PRBs. As can be seen, when PUCCH format 2 is utilized, the UE may transmit UCI using the multiple PUCCH resources configured as respective multiple PRBs in a certain symbol.

As in the PUCCH in the existing system, in the long PUCCH (for example, PUCCH formats 1, 3, and 4), UCI may be transmitted using the PUCCH resource hopped in a frequency direction (see FIG. 1B) .

In the existing LTE systems, a common system bandwidth is configured in the UEs, and thus, frequency hopping is applied such that the PUCCH is mapped at both ends of the system bandwidth. In contrast, in the future radio communication systems, a study is in progress to individually configured a frequency domain for use in communication for each UE without allowing all the UEs to perform communication through a common system bandwidth. For example, in an UL, a first frequency band (BWP (Bandwidth part)) which is relatively wide may be configured in a higher-performance UE, whereas a second BWP which is narrower than the first BWP may be configured in a lower-performance UE.

Thus, as in the existing systems, frequency hopping is applied, and the PUCCH is mapped to the end of the frequency band configured for each UE. In this case, with an increase in the number of the UEs having different frequency bandwidths, PUCCHs are mapped to multiple domains of the system bandwidth, which can result in deterioration of resource utilization efficiency.

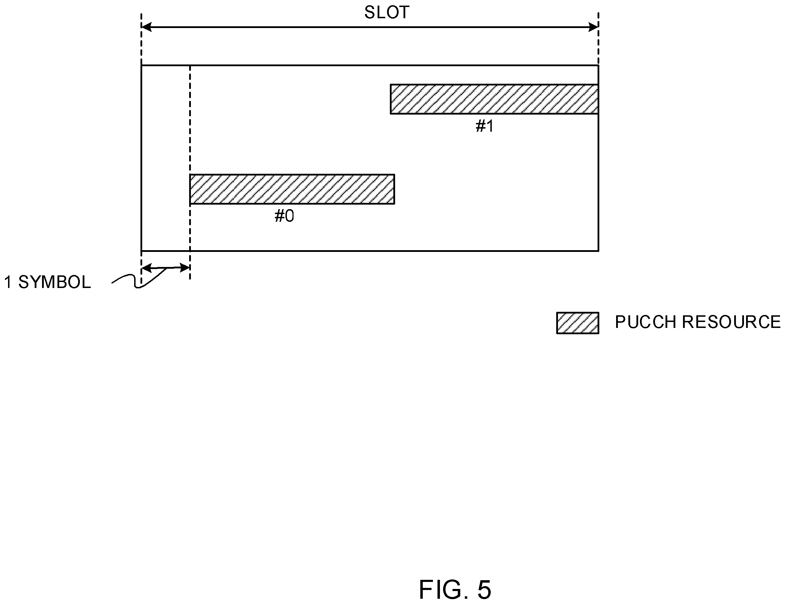

In view of improving resource utilization efficiency by flexible configuration of the PUCCH for each UE, it is assumed that a PUCCH is not necessarily mapped to the end of the frequency bandwidth, and its mapped domain is flexibly controlled. Thus, when the long PUCCH is used, it is assumed that the base station designates multiple (e.g., two) PUCCH resources before and after the frequency hopping to control transmission of UCI (see FIG. 5). FIG. 5 shows a case where PUCCH resources #0 and #1 are respectively allocated to former and latter stages of the frequency hopping.

UCI may include at least one of a scheduling request (SR), transmission confirmation information (e.g., also referred to as HARQ-ACK (Hybrid Automatic Repeat reQuest-Acknowledge), ACK or NACK (Negative ACK) or A/N) in response to a DL data channel (for example, PDSCH (Physical Downlink Shared Channel), channel quality information (CQI (Channel Quality Indicator)), channel state information (CSI) including rank information (RI (Rank Indicator)), beam index (BI) information, and a buffer status report (BSR).

It is assumed that the PUCCH (the short or long PUCCH) for more than two bits of information transmits multiple UCI, such as HARQ-ACK, CSI (e.g., CQI, RI, PMI, and BI), SR, and BSR, having different required error rates.

Examples of a method of coding multiple UCI may include joint coding and separate coding.

Joint Coding: Multiple UCI are jointly coded to generate one piece of coded information. According to the claimed invention, in the joint coding, multiple UCI are combined together to generate joint information, and a CRC of the joint information is calculated and added to the joint information. This generates the coded information. In this case, it is unnecessary to add the CRC (Cyclic Redundancy Check) to each of the multiple information, thereby making it possible to reduce CRC overhead. When the multiple information to be multiplexed have different required error rates, the joint coding needs to satisfy the lowest required error rate in the multiple information to be multiplexed.
Separate Coding: Each of multiple UCI is coded to generate multiple coded information. In a non-claimed illustrative example based on in the separate coding, CRCs of the respective multiple UCI are calculated and each of the CRCs are added to corresponding piece of UCI. This generates the multiple coded information. In this case, it is necessary to add the CRCs to the respective pieces of UCI, thus increasing the CRC overhead. When the multiple UCI have different required error rates, the separate coding is performed so as to satisfy the respective required error rates of the multiple UCI. When the multiple UCI have different required error rates, the CRCs having different lengths may be added to the respective pieces of UCI.

As can be seen, transmitting multiple UCI using one PUCCH causes a problem of how to code such multiple UCI. In view of this, the inventors of the present inventors studied a method of coding such multiple UCI, and results in the present invention.

Hereinafter, the present embodiment will be described in detail.

### (Aspect)

In the present aspect, the UE codes multiple UCI according to the types of the UCI, and jointly codes the multiple information obtained from the coding.

For example, the operation of the UE in a case that the UE transmits UCI 1 and UCI 2 using one PUCCH will be described. UCI 1 and UCI 2 may be different types of UCI. Each type of the UCI may be, for example, one of HARQ-ACK, CSI, CQI, RI, PMI, BI, SR, or BSR. The required error rate of UCI 1 may be different from required error rate of UCI 2.

First, the UE codes UCI 1 and UCI 2 (first coding) according to the type of the UCI to generate first coded information. Next, the UE jointly codes multiple first coded information (second coding) to generate second coded information. Next, the UE transmits the second coded information through the PUCCH (short PUCCH or long PUCCH).

Note that the UE may transmit three or more information using one PUCCH.

The first coding of each UCI is independently performed, thereby making it possible to independently configure the required error rate of each UCI. Performing the first coding and the second coding makes it possible to utilize the joint coding, even when multiple UCI have different required error rates. According to the claimed invention, a CRC is not added to each UCI, thus improving utilization efficiency of the PUCCH resource and reducing the load on the UE.

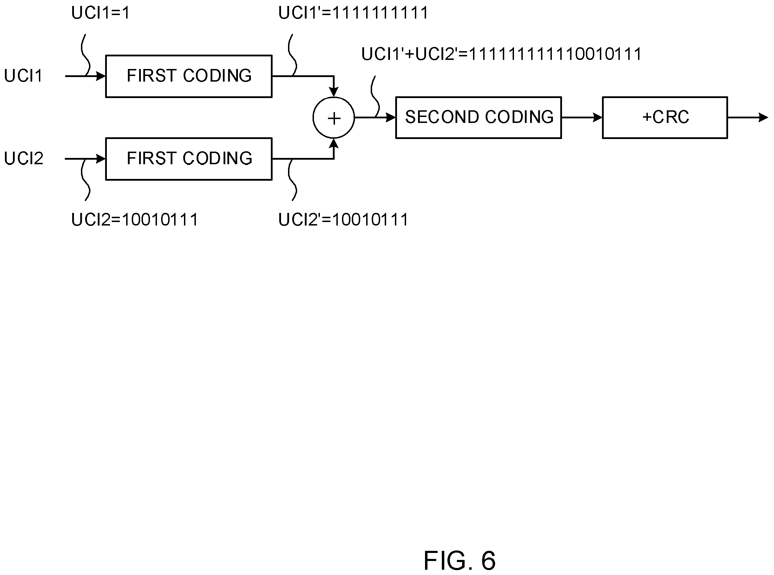

A specific example of the coding method will be described with reference to FIG. 6.

Assume that the type of UCI 1 is HARQ-ACK and has a required bit error rate (BER) of 10^(-3), and the type of UCI 2 is CSI and has a required BER of 10^(-2). Assume that UCI 1 is {1, 0}, and UCI 2 is {1, 0, 0, 1, 0, 1, 1}.

The first coding may be spreading processing. The spreading processing may use a repetition code. For example, in the first coding of UCI 1, its code length is spread using a repetition code to a code length ten times longer than the original one. As a result, first coded information UCI 1' obtained from UCI 1 is {(1, 1, 1, 1, 1, 1, 1, 1, 1, 1), (0, 0, 0, 0, 0, 0, 0, 0, 0, 0)}. The spreading processing may multiply a certain spreading code to spread (modulate) the UCI.

For example, in the first coding of UCI 2, UCI 2 is not processed. As a result, first coded information UCI 2' obtained from UCI 2 is {1, 0, 0, 1, 0, 1, 1}, which is the same as UCI 2.

In this manner, some of the multiple first coding operations corresponding to the multiple UCI do not have to process the corresponding UCI. The first coding of UCI, having the highest required error rate, of the multiple UCI does not have to process the UCI. The first coding different from the coding for UCI 1 may be performed on UCI 2. The first coding on UCI 2 may be spreading at a different spreading rate from that for UCI 1.

The second coding is joint coding on UCI 1' and UCI 2'. For example, in the second coding, UCI 1' and UCI 2' are concatenated together to generate concatenated information, and the concatenated information is coded using a certain coding method to generate second coded information. The certain coding method may be an RM code (Reed-Muller code) or may be a Polar code. The UE may use the RM code as a coding method when the length (the number of bits) of the concatenated information is equal to or less than 11 bits, and may use the Polar code as a coding method when the length of the concatenated information is more than 11 bits.

Furthermore, according to the claimed invention, with respect to the second coded information, the UE calculates CRC having a length according to the length of the second coded information, and adds the CRC to the second coded information. According to the claimed invention, the second coding includes the addition of the CRC. The UE does not add the CRC to the second coded information.

A coding rate of the first coding and/or of the second coding may be determined based on the required error rate of each UCI. In the example of FIG. 6, the first coding and the second coding of UCI 1 allow UCI 1 to satisfy the required error rate. The second coding allows UCI 2 to satisfy the required error rate. Therefore, UCI 1 and UCI 2 can achieve different required error rates.

The UE may determine the first coding and/or the second coding according to the types of the generated UCI. The types of the UCI and the number of pieces of UCI differ depending on a transmission timing of the PUCCH. This allows achievement of the required error rate according to the UCI. Association of the types of UCI with the first coding and/or the second coding may be configured in the UE from a radio base station using higher layer signaling or broadcasting information, or may be defined by specifications.

The multiple UCI are processed in different manners, and the results of the processing are jointly coded. This makes it possible to independently configured the error rate for each UCI and effectively use the PUCCH resource.

### (Radio Communication System)

Hereinafter, a structure of a radio communication system according to one embodiment of the present invention will be described. In this radio communication system, the radio communication method according to each embodiment of the present invention described above may be used alone or may be used in combination for communication.

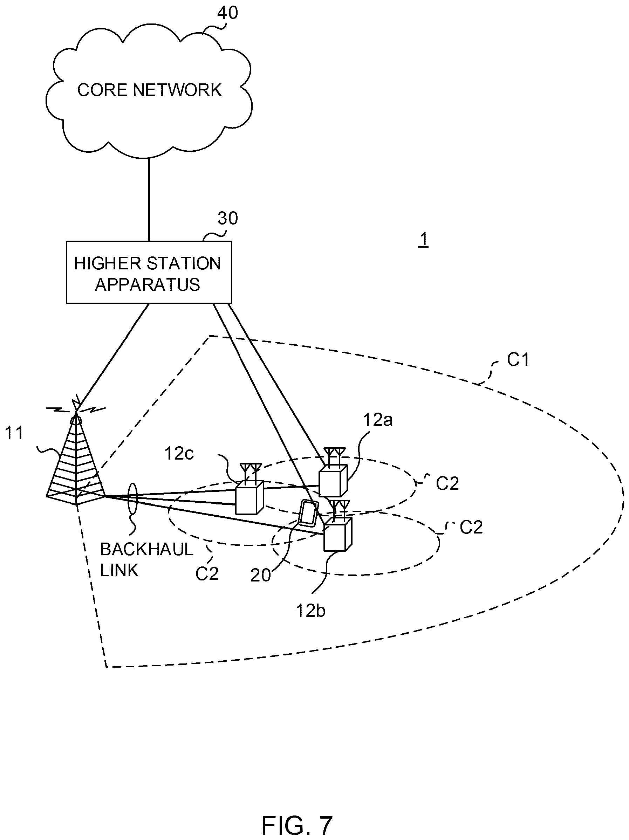

FIG. 7 is a diagram to show an example of a schematic structure of the radio communication system according to one embodiment of the present invention. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "FRA (Future Radio Access)," "New-RAT (Radio Access Technology)," "NR (New Radio)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement of each cell and user terminal 20 are by no means limited to the aspect shown in the diagram.

The user terminals 20 can connect with both the radio base station 11 and the radio base stations 12. It is assumed that the user terminals 20 use the macro cell C1 and the small cells C2 at the same time by CA or DC. The user terminals 20 can execute CA or DC by using a plurality of cells (CCs) (for example, five or less CCs, six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

A structure may be employed in which wired connection (for example, an optical fiber in compliance with the CPRI (Common Public Radio Interface), an X2 interface, and so on) or wireless connection is established between the radio base station 11 and the radio base stations 12 (or between two radio base stations 12) .

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME), and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) is applied to the uplink.

OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a configuration in which different numerologies are applied within a cell and/or between cells may be adopted. Note that a numerology means, for example, a communication parameter (for example, a subcarrier spacing, a bandwidth, or the like) used for transmission/reception of a signal.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks), and so on are communicated in the PDSCH. Also, MIBs (Master Information Blocks) are communicated in the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI) including PDSCH and PUSCH scheduling information is communicated in the PDCCH, for example. The number of OFDM symbols to use for the PDCCH is communicated in the PCFICH. Transmission confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information, and the like are communicated in the PUSCH. Radio quality information (CQI (Channel Quality Indicator)) of the downlink, transmission confirmation information, and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### (Radio Base Station)

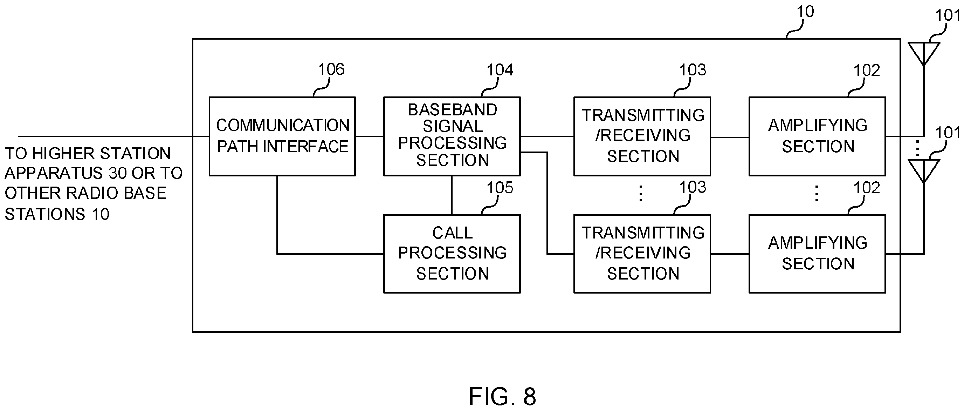

FIG. 8 is a diagram to show an example of an overall structure of the radio base station according to one embodiment of the present invention. A radio base station 10 includes a plurality of transmitting/receiving antennas 101, amplifying sections 102, transmitting/receiving sections 103, a baseband signal processing section 104, a call processing section 105 and a transmission line interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the transmission line interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the transmission line interface 106. The call processing section 105 performs call processing (setting up, releasing and so on) for communication channels, manages the state of the radio base station 10, manages the radio resources and so on.

The transmission line interface 106 transmits and/or receives signals to and/or from the higher station apparatus 30 via a certain interface. The transmission line interface 106 may transmit and/or receive signals (backhaul signaling) with other radio base stations 10 via an inter-base station interface (for example, an optical fiber in compliance with the CPRI (Common Public Radio Interface) and an X2 interface).

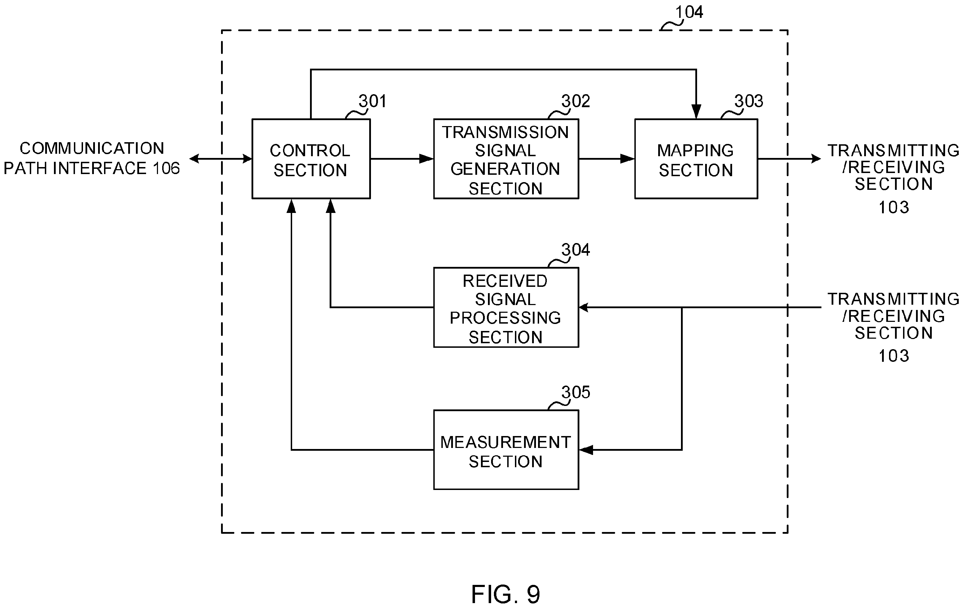

FIG. 9 is a diagram to show an example of a functional structure of the radio base station according to one embodiment of the present invention. Note that, although this example primarily shows functional blocks that pertain to characteristic parts of the present embodiment, the radio base station 10 includes other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit, or control apparatus that can be described based on general understanding of the technical field to which the present invention pertains.

The control section 301, for example, controls the generation of signals by the transmission signal generation section 302, the mapping of signals by the mapping section 303, and so on. The control section 301 controls the signal receiving processes by the received signal processing section 304, the measurements of signals by the measurement section 305, and so on.

The control section 301 controls the scheduling (for example, resource assignment) of system information, a downlink data signal (for example, a signal transmitted on the PDSCH), a downlink control signal (for example, a signal transmitted on the PDCCH, the EPDCCH, or the NR-PDCCH). Based on the results of determining necessity or not of retransmission control to the uplink data signal, or the like, the control section 301 controls generation of a downlink control signal (for example, transmission confirmation information, or the like), a downlink data signal, and so on. The control section 301 controls the scheduling of a synchronization signal (for example, PSS (Primary Synchronization Signal)/SSS (Secondary Synchronization Signal)), a downlink reference signal (for example, CRS, CSI-RS, DMRS), and so on.

The control section 301 controls the scheduling of an uplink data signal (for example, a signal transmitted on the PUSCH), an uplink control signal (for example, a signal transmitted on the PUCCH and/or the PUSCH), a random access preamble transmitted on the PRACH, an uplink reference signal, and so on.

The control section 301 controls the PUCCH resources used for UCI transmission to be notified to the UE.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present invention pertains.

For example, the transmission signal generation section 302 generates DL assignment to report assignment information of downlink signal and UL grant to report assignment information of uplink signal, based on commands from the control section 301. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources described above, based on commands from the control section 301, and outputs these to the transmitting/receiving sections 103. The mapping section 303 can be constituted with a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit, or signal processing apparatus that can be described based on general understanding of the technical field to which the present invention pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit, or measurement apparatus that can be described based on general understanding of the technical field to which the present invention pertains.

The measurement section 305 may measure a received power of the received signal (for example, RSRP (Reference Signal Received Power)), a received quality (for example, RSRQ (Reference Signal Received Quality), an SINR (Signal to Interference plus Noise Ratio), uplink channel information (for example, CSI), and so on. The measurement results may be output to the control section 301.

### (User Terminal)

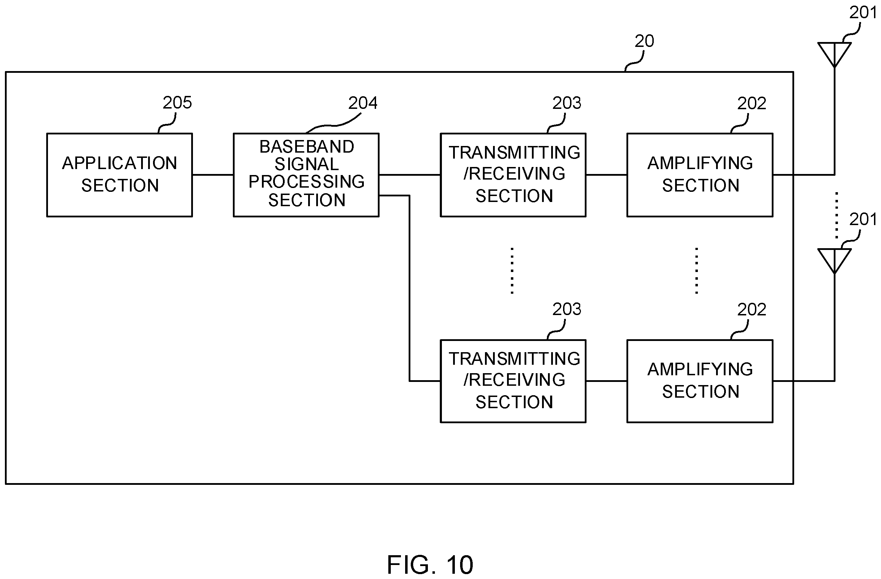

FIG. 10 is a diagram to show an example of an overall structure of a user terminal according to one embodiment of the present invention. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 may be configured with transmitters/receivers, transmitting/receiving circuits, or pieces of transmitting/receiving apparatus that can be described based on general understanding of the technical field to which the present invention pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving section 203 may transmit information (for example, second coded information) obtained from the second coding using an uplink control channel (e.g., the short or long PUCCH).

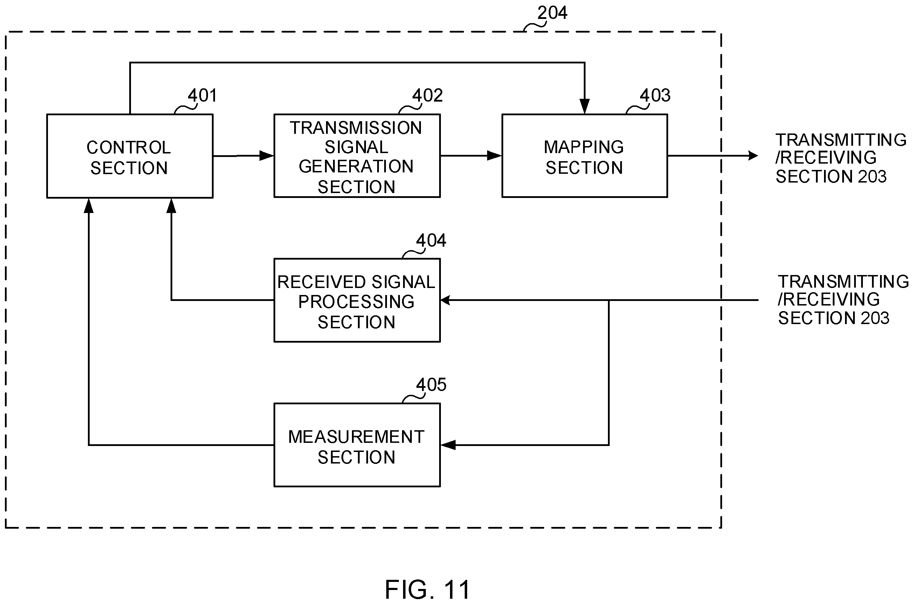

FIG. 11 is a diagram to show an example of a functional structure of a user terminal according to one embodiment of the present invention. Note that, although this example primarily shows functional blocks that pertain to characteristic parts of the present embodiment, the user terminal 20 includes other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit, or control apparatus that can be described based on general understanding of the technical field to which the present invention pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 may control the first coding of coding at least one of multiple uplink control information (e.g., the UCI), and concatenating multiple information obtained from the first coding (e.g., the first coded information), and second coding of coding the concatenated information.

The control section 401 may perform the first coding according to the types of uplink control information.

The multiple uplink control information may include types different from each other.

The first coding may be spreading processing.

The control section 401 may perform the second coding according to a length of the concatenated information.

The transmission signal generation section 402 generates uplink signals (uplink control signals, uplink data signals, uplink reference signals and so on) based on commands from the control section 401, and outputs the uplink signals to the mapping section 403. The transmission signal generation section 402 may be a signal generator, a signal generation circuit, or signal generation apparatus that can be described based on general understanding of the technical field to which the present invention pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 may be a mapper, a mapping circuit, or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can be constituted with a signal processor, a signal processing circuit, or signal processing apparatus that can be described based on general understanding of the technical field to which the present invention pertains. Also, the received signal processing section 404 can constitute a receiving section according to the present invention.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. For example, the measurement section 405 conducts measurements by using a downlink reference signal transmitted from the radio base station 10. The measurement section 405 can be constituted with a measurer, a measurement circuit, or measurement apparatus that can be described based on general understanding of the technical field to which the present invention pertains.

The measurement section 405 may measure a received power of the received signal (for example, RSRP), a received quality (for example, RSRQ, reception SINR), downlink channel information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of apparatus.

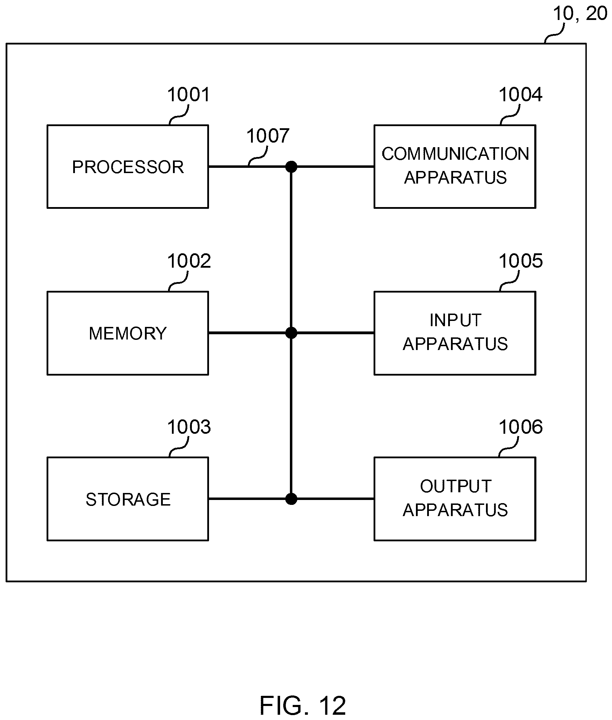

For example, a radio base station, a user terminal, and so on according to one embodiment of the present invention may function as a computer that executes the processes of the radio communication method of the present invention. FIG. 12 is a diagram to show an example of a hardware structure of the radio base station and the user terminal according to one embodiment of the present invention. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication by the communication apparatus 1004 and read and/or write data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and/or the like for implementing a radio communication method according to one embodiment of the present invention.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology used in this specification and/or the terminology that is needed to understand this specification may be replaced by other terms that convey the same or similar meanings. For example, "channels" and/or "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to certain values, or may be represented in another corresponding information. For example, radio resources may be specified by certain indices. Furthermore, mathematical expressions that use these parameters, and so on may be different from those expressly disclosed in this specification.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and/or others described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be performed explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" as used in this specification are used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to as, by a person skilled in the art, a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by a base station may, in some cases, be performed by upper nodes. In a network constituted of one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access." In this specification, the two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions, (both visible and invisible) optical regions, or the like.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

### (Supplementary Note)

Supplementary notes of the present disclosure are added below.

The present disclosure relates to joint coding of multiple uplink control information (UCI) for an uplink (UL) control channel (a short PUCCH (Physical Uplink Control Channel) or a long

### PUCCH).

### (Background and Problems to be Solved)

It is assumed that a short or long PUCCH for more than two bits of information transmits multiple UCI, such as HARQ-ACK, CSI (e.g., CQI, RI, PMI, and BI), and SR, having different required error rates at the same time.

The following two coding methods of coding multiple UCI are conceivable.

Joint Coding: According to the claimed invention, a CRC (Cyclic Redundancy Check) is not added to each UCI. However, since the multiple UCI to be multiplexed have different required error rates, it is necessary to satisfy the lower error rate of the UCI of the multiple UCI to be multiplexed.
Separate Coding: In a non-claimed illustrative example, the CRC is needed to be added to each UCI, thus increasing CRC overhead.

### (Proposal)

The multiple UCI are independently coded according to the types of the UCI, and thereafter, are jointly coded.

For example, in order to multiplex UCI 1 and UCI 2, UCI 1 and UCI 2 are independently coded (first coding), and thereafter, the first coded UCI 1 and UCI 2 are jointly coded (second coding).

Since the error rates of UCI 1 and UCI 2 can independently be configured, the multiple UCI having different required error rates can be jointly coded (according to the claimed invention, a CRC is not added independently, leading to efficient multiplexing).

### (Example)

For example, assume that UCI 1 is HARK-ACK (has a required BER of 10^(-3)), and UCI 2 is CSI (has a required BER of 10^(-2)).

As shown In FIG. 6, in the first coding, UCI 1 = {1, 0} is spread to be ten times longer. UCI 1 after the spreading is, e.g., {(1, 1, 1, 1, 1, 1, 1, 1, 1, 1), (0, 0, 0, 0, 0, 0, 0, 0, 0, 0)}.

UCI 2 may, but does not have to, be spread, independently. A certain method may be used for the spreading code. As the spreading code, a repetition code may be used.

UCI 1 and UCI 2 after the first coding are synthesized, and thereafter, UCI 1 and UCI 2 are jointly coded (second coding). As the joint coding method, it may be assumed that the RM code is used when the total number of the bits is 11 or less, and the polar code when the number of the bits is more than 11. In addition, a certain CRC may be added depending on the number of the bits.

Now, although the present invention has been described in detail above, it should be obvious to a person skilled in the art that the present invention is by no means limited to the embodiments described herein. The present invention can be implemented with various corrections and in various modifications, without departing from the scope of the present invention defined by the recitations of claims. Consequently, the description herein is provided only for the purpose of explaining examples, and should by no means be construed to limit the present invention in any way.

The present application is based on Japanese patent application No. 2014-208620, filed on October 11, 2017.

## Claims

1. A terminal (20) comprising:
a control section (401) configured to control first coding of coding at least one of multiple uplink control information, and concatenating multiple information obtained from the first coding, and second coding of coding the concatenated information;
a transmitting section (203) configured to transmit information obtained from the second coding using an uplink control channel; and
wherein the control section (401) is configured to perform the second coding according to a length of the concatenated information, **characterized in that**:
the control section (401) is configured to not add a CRC to each of the multiple uplink control information and to add a CRC, calculated according to the length of the information obtained from the second coding, to the information obtained from the second coding.

2. The terminal (20) according to claim 1, wherein
the control section (401) is configured to perform the first coding according to types of uplink control information.

3. The terminal (20) according to claim 1 or 2, wherein the multiple uplink control information includes types different from each other.

4. The terminal (20) according to any one of claims 1 to 3, wherein the first coding is spreading processing.

5. A radio communication method of a terminal (20), the radio communication method comprising:
controlling first coding of coding at least one of multiple uplink control information, and concatenating multiple information obtained from the first coding, and second coding of coding the concatenated information, and performing the second coding according to a length of the concatenated information; and
transmitting information obtained from the second coding using an uplink control channel,
**characterized in that** a CRC is not added to each of the multiple uplink control information and a CRC, calculated according to the length of the information obtained from the second coding, is added to the information obtained from the second coding.

## Patentansprüche

1. Endgerät (20), umfassend:
einen Steuerabschnitt (401), der so konfiguriert ist, dass er eine erste Kodierung einer Kodierung mindestens einer von mehreren Aufwärtsverbindungssteuerinformationen und eine Verknüpfung mehrerer aus der ersten Kodierung erhaltenen Informationen und eine zweite Kodierung einer Kodierung der verknüpften Informationen steuert;
einen Übertragungsabschnitt (203), der so konfiguriert ist, dass er aus der zweiten Kodierung erhaltene Informationen unter Verwendung eines Aufwärtsverbindungssteuerkanals überträgt; und
wobei der Steuerabschnitt (401) so konfiguriert ist, dass er die zweite Kodierung entsprechend einer Länge der verknüpften Informationen durchführt, **dadurch gekennzeichnet, dass**:
der Steuerabschnitt (401) so konfiguriert ist, dass er nicht zu jeder der mehreren Aufwärtsverbindungssteuerinformationen eine CRC hinzufügt und eine CRC, die entsprechend der Länge der aus der zweiten Kodierung erhaltenen Informationen berechnet wird, zu den aus der zweiten Kodierung erhaltenen Informationen hinzufügt.

2. Endgerät (20) nach Anspruch 1, wobei
der Steuerabschnitt (401) so konfiguriert ist, dass er die erste Kodierung entsprechend Arten von Aufwärtsverbindungssteuerinformationen durchführt.

3. Endgerät (20) nach Anspruch 1 oder 2, wobei die mehreren Aufwärtsverbindungssteuerinformationen voneinander verschiedene Arten einschließen.

4. Endgerät (20) nach einem der Ansprüche 1 bis 3, wobei die erste Kodierung eine Spreizverarbeitung ist.

5. Funkkommunikationsverfahren eines Endgerätes (20), wobei das Funkkommunikationsverfahren umfasst:
Steuern einer ersten Kodierung einer Kodierung von mindestens einer von mehreren Aufwärtsverbindungssteuerinformationen und Verknüpfen von mehreren aus der ersten Kodierung erhaltenen Informationen, und einer zweiten Kodierung einer Kodierung der verknüpften Informationen, und Durchführen der zweiten Kodierung entsprechend einer Länge der verknüpften Informationen; und
Übertragen von aus der zweiten Kodierung erhaltenen Informationen unter Verwendung eines Aufwärtsverbindungssteuerkanals,
**dadurch gekennzeichnet ist, dass**
eine CRC nicht zu jeder der mehreren Aufwärtsverbindungssteuerinformationen hinzugefügt wird und eine CRC, die entsprechend der Länge der aus der zweiten Kodierung erhaltenen Informationen berechnet wird, zu den aus der zweiten Kodierung erhaltenen Informationen hinzugefügt wird.

## Revendications

1. Terminal (20) comprenant :
une section de commande (401) configurée pour commander un premier codage d'un codage d'au moins l'une parmi de multiples informations de commande de liaison montante, et une concaténation de multiples informations obtenues par le premier codage, et un second codage du codage des informations concaténées ;
une section de transmission (203) configurée pour transmettre des informations obtenues par le second codage grâce à un canal de commande de liaison montante ; et
dans lequel la section de commande (401) est configurée pour mettre en oeuvre le second codage selon une longueur des informations concaténées, **caractérisé en ce que** :
la section de commande (401) est configurée pour ne pas ajouter un contrôle de redondance cyclique (CRC) à chacune des multiples informations de commande de liaison montante et pour ajouter un CRC, calculé selon la longueur des informations obtenues par le second codage, aux informations obtenues par le second codage.

2. Terminal (20) selon la revendication 1, dans lequel
la section de commande (401) est configurée pour mettre en oeuvre le premier codage selon des types d'informations de commande de liaison montante.

3. Terminal (20) selon la revendication 1 ou la revendication 2, dans lequel les multiples informations de commande de liaison montante incluent des types différents les uns des autres.

4. Terminal (20) selon l'une quelconque des revendications 1 à 3, dans lequel le premier codage est un traitement d'étalement.

5. Procédé de communication radio d'un terminal (20), le procédé de communication radio comprenant :
la commande d'un premier codage d'un codage d'au moins l'une parmi de multiples informations de commande de liaison montante, et la concaténation de multiples informations obtenues par le premier codage, et d'un second codage du codage des informations concaténées, et la réalisation du second codage selon une longueur des informations concaténées ; et
la transmission des informations obtenues par le second codage grâce à un canal de commande de liaison montante,
**caractérisé en ce que**
un CRC n'est pas ajouté à chacune des multiples informations de commande de liaison montante et un CRC, calculé selon la longueur des informations obtenues par le second codage, est ajouté aux informations obtenues par le second codage.
